# FASCICULE DE BREVET EUROPEEN

(11) **EP 3 666 647 B1**
(45) Date de publication et mention de la délivrance du brevet: **27.10.2021**
(21) Numéro de dépôt: 19214916.9
(22) Date de dépôt: 10.12.2019
(51) Int. Cl.: B64C 25/40, G05D 1/00, B64F 1/00

(54) **PROCEDE D'ASSERVISSEMENT EN COUPLE D'UN DISPOSITIF D'ENTRAINEMENT EN ROTATION DE ROUES D'UN AERONEF**
VERFAHREN ZUR DREHMOMENTREGELUNG EINER DREHANTRIEBSVORRICHTUNG DER RÄDER EINES LUFTFAHRZEUGS
METHOD FOR TORQUE CONTROL OF A DEVICE FOR ROTATING THE WHEELS OF AN AIRCRAFT

(30) Priorité: 11.12.2018 FR 1872689
(43) Date de publication de la demande: 17.06.2020
(73) Titulaire: Safran Landing Systems, 78140 Vélizy-Villacoublay (FR)
(72) Inventeur: BOISSARD, Laurent, 77550 Moissy-Cramayel (FR)
(74) Mandataire: Lavialle, Bruno François Stéphane

(56) Documents cités:
- EP-A1- 2 886 454
- EP-A1- 3 118 106
- EP-A1- 3 321 758
- WO-A1-2012/061532
- US-A1- 2015 210 383

## Description

L'invention concerne un procédé d'asservissement en couple d'un dispositif d'entraînement en rotation de roues d'un aéronef.

### ARRIERE PLAN DE L'INVENTION

On connaît des dispositifs d'entraînement en rotation des roues d'un aéronef permettant de déplacer l'aéronef au sol sans l'aide de ses groupes motopropulseurs. Le dispositif d'entraînement comprend des actionneurs d'entraînement adaptés à entraîner des roues de l'aéronef en rotation, lorsqu'ils sont placés en position d'engagement avec les roues. Sur un aéronef comportant deux atterrisseurs principaux comme par exemple l'AIRBUS A320, il a été proposé des dispositifs d'entraînement comportant sur chacun des atterrisseurs principaux au moins un actionneur d'entraînement adapté à entraîner au moins une roue en rotation. Diverses stratégies de commande de ces dispositifs d'entraînement ont été proposées, dont des stratégies d'asservissement en couple à une consigne de couple générée par le pilote comme divulgué dans EP3118106.

L'asservissement en couple a l'avantage de ressembler pour le pilote à un déplacement classique de l'aéronef au moyen de la manette des gaz. Cependant, le maintien d'une vitesse faible et stable sans oscillation, par exemple à l'approche d'une porte d'aérogare, se révèle délicat à obtenir, même pour un pilote expérimenté.

### OBJET DE L'INVENTION

L'invention a pour objet de faciliter le déplacement de l'aéronef au sol en facilitant sa conduite à faible vitesse.

### RESUME DE L'INVENTION

En vue de la réalisation de ce but, on propose un procédé d'asservissement en couple d'un dispositif d'entraînement en rotation de roues d'un aéronef comportant des actionneurs pour entraîner sélectivement des roues de l'aéronef en rotation pour assurer son déplacement au sol, comportant l'étape de réguler un couple généré par le dispositif d'entraînement en fonction d'une consigne de couple délivrée par le pilote. Selon l'invention, le procédé comporte l'étape, tant que la consigne de couple n'est pas suffisante pour garantir le maintien d'une vitesse stable de déplacement de l'aéronef, de générer une consigne de couple de remplacement permettant le déplacement de l'aéronef à une vitesse stable et de substituer la consigne de couple de remplacement à la consigne de couple générée par le pilote.

Ainsi, tant que la consigne de couple générée par le pilote n'est pas suffisante pour garantir le déplacement de l'aéronef à une vitesse stable, le procédé permet la génération d'une consigne de couple de remplacement pour assurer le déplacement de l'aéronef à une vitesse stable, ce qui facilite considérablement la conduite de l'aéronef à basse vitesse. Ce n'est que lorsque le pilote augmente franchement la consigne de couple, par exemple lorsqu'il quitté la porte de l'aérogare pour se rendre au seuil de la piste, que l'asservissement réutilise la consigne de couple générée par le pilote.

La transition entre les deux régimes peut se faire de multiples façons. Selon un premier mode particulier de mise en œuvre, la substitution de la consigne de couple de remplacement à la consigne de couple générée par le pilote se fait de façon transparente pour le pilote. Ainsi, le pilote pense générer une faible consigne de couple, mais en réalité l'asservissement génère une consigne de couple de remplacement augmentée en tant que de besoin pour garantir une vitesse de déplacement stable, qui ne risque pas de surprendre le pilote. La consigne de couple opérationnelle qui sera fournie au dispositif d'entraînement des roues est alors le maximum de la consigne de couple générée par le pilote et de la consigne de couple de remplacement.

Selon un deuxième mode particulier de mise en œuvre, on utilise un organe de commande qui comporte au moins un cran pour lequel une vitesse de déplacement stable est régulée. Ce n'est qu'après dépassement de ce cran que l'organe de commande permet au pilote de générer une consigne de couple.

De préférence alors, l'organe de génération comporte un bouton pour, après avoir dépassé le ou les crans de l'organe de génération de consigne de couple, commander une régulation en vitesse à la vitesse de l'aéronef au moment où le bouton est actionné.

### BREVE DESCRIPTION DES DESSINS

L'invention sera mieux comprise à la lumière de la description qui suit de modes particuliers de mise en œuvre du procédé de l'invention en référence aux figures des dessins annexés parmi lesquelles :
- la figure 1 est un schéma-bloc d'un asservissement mettant en œuvre le procédé de l'invention selon un premier mode particulier de mise en œuvre ;
- la figure 2 est un schéma-bloc d'un asservissement mettant en œuvre le procédé de l'invention selon un deuxième mode particulier de mise en œuvre ;
- la figure 3 est une figure analogue à celle de la figure 2 illustrant une variante de mise en œuvre.

### DESCRIPTION DETAILLEE DE L'INVENTION

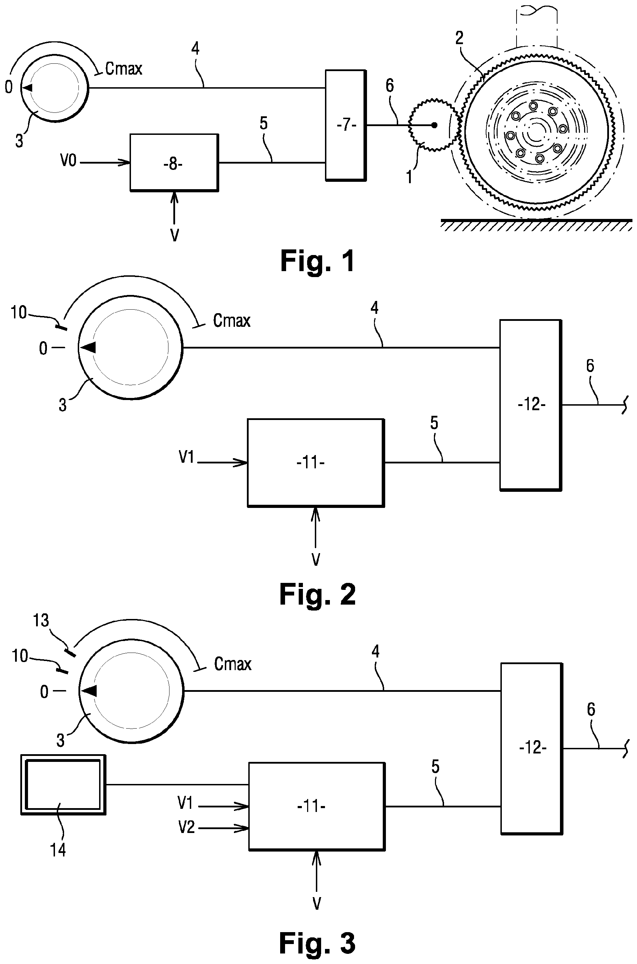

Le procédé de l'invention, détaillé ici en référence à la figure 1, vise à faciliter le déplacement d'un aéronef au moyen d'un dispositif d'entraînement 1 des roues 2 de celui-ci. Le dispositif d'entraînement 1 n'est pas l'objet de l'invention. Il comprend en général des actionneurs d'entraînement munis de motoréducteurs pour l'entraînement en rotation de roues des atterrisseurs principaux. L'invention a trait à la façon dont on commande le dispositif d'entraînement 1.

Les pilotes sont habitués à déplacer un aéronef au sol en utilisant la manette des gaz. La commande du dispositif d'entraînement par la génération d'une consigne de couple vise à offrir aux pilotes un mode de déplacement qui leur est familier, en dosant la force de propulsion via le couple dispensé aux roues par le dispositif d'entraînement des roues. A cet effet, le pilote dispose ici d'une manette 3 comportant une course permettant au pilote de commander une consigne de couple nominale 4 comprise entre 0% et 100% d'un couple maximal Cmax.

Cependant, des expérimentations ont permis de déceler que le maintien d'une vitesse stable à faible vitesse est délicat, même pour des pilotes expérimentés. Pour pallier cet inconvénient, le procédé de l'invention comporte la génération d'une consigne de couple de remplacement 5 qui va transitoirement remplacer la consigne de couple nominale 4.

La consigne de couple de remplacement 5 est générée par un générateur 8 à une valeur permettant le déplacement de l'aéronef à une vitesse stable. En pratique, on retient une valeur de couple permettant le déplacement de l'aéronef à une vitesse Vo modeste mais stabilisée, facilitant la gestion de l'aéronef en approche d'une porte d'aérogare.

On transmet alors au dispositif d'entraînement une consigne de couple opérationnelle 6 qui, selon le cas, sera égale à la consigne de couple nominale 4 ou à la consigne de couple de remplacement 5. Dans le mode de mise en œuvre illustré ici, la consigne de couple nominale 4 et la consigne de couple de remplacement sont ici en permanence comparées par un comparateur 7 qui génère une consigne opérationnelle 6 égale au maximum de ces deux valeurs. Ainsi, la sélection de l'une ou l'autre des valeurs est transparente pour le pilote. Ici, le générateur 8 ne réalise pas un asservissement en vitesse, mais se contente de générer une consigne de remplacement 5 de valeur suffisante pour assurer un déplacement à vitesse stable.

Selon un deuxième mode de mise en œuvre illustré à la figure 2, la manette 3 comporte en début de course un cran 10 sur lequel le pilote peut positionner la manette 3 pour activer un générateur 11 de consigne de couple qui génère une consigne de couple de remplacement 5 déterminée de façon à asservir la vitesse V de l'aéronef à une première vitesse de consigne V1 déterminée. La consigne de couple de remplacement 5 est ainsi déterminée en temps réel par exemple en fonction d'une différence entre la vitesse de l'aéronef V et la consigne de vitesse V1, pour asservir la vitesse V de l'aéronef à la vitesse de consigne V1. Ainsi, on garantit une vitesse sensiblement constante qui facilite l'opération de l'aéronef à proximité de l'aérogare. Un sélecteur 12 génère une consigne opérationnelle 6 égale à la consigne de couple de remplacement 5 si le générateur 11 est activé, ou égale à la consigne de couple nominal 4 si le générateur 11 n'est pas activé.

Bien entendu, comme illustré à la figure 3, on peut prévoir sur la manette 3 un deuxième cran 13 pour lequel le générateur 11 de consigne de couple génère une consigne de couple de remplacement déterminée de façon à asservir la vitesse V de l'aéronef à une deuxième vitesse de consigne V2 déterminée. Ainsi, le pilote dispose de deux crans lui permettant de faire évoluer l'aéronef selon deux vitesses prédéterminées, à savoir la vitesse V1 (par exemple une vitesse d'approche d'une porte d'aérogare) et à la vitesse V2 (par exemple une vitesse de déplacement dans une zone proche de l'aérogare) . Le pilote peut toujours manoeuvrer la manette 3 pour dépasser ces deux crans et envoyer au dispositif d'entraînement une consigne de couple bien plus élevée pour provoquer le déplacement de l'aéronef à plus grande vitesse, par exemple sur le trajet entre l'aérogare et la piste d'envol. On peut bien entendu prévoir d'autres crans, correspondant à autant de vitesses prédéterminées.

Selon un mode de mise en œuvre particulier, on prévoit sur la manette 3 une commande de régulation de vitesse 14 permettant d'asservir la vitesse V de l'aéronef à la vitesse Va de l'aéronef lors de l'actionnement par le pilote de la commande 14. Une consigne de couple de remplacement 5 est alors générée par le générateur 11, même sans action du pilote sur la manette 3, pour assurer cet asservissement en vitesse.

L'invention n'est pas limitée à ce qui vient d'être décrit, mais englobe au contraire toute variante entrant dans le cadre défini par les revendications.

## Revendications

1. Procédé d'asservissement en couple d'un dispositif d'entraînement (1) en rotation de roues (2) d'un aéronef comportant des actionneurs pour entraîner sélectivement des roues de l'aéronef en rotation pour assurer son déplacement au sol, comportant l'étape de réguler un couple généré par le dispositif d'entraînement en fonction d'une consigne de couple (4) délivrée par le pilote, **caractérisé en ce que** le procédé comporte l'étape, tant que la consigne de couple n'est pas suffisante pour garantir le maintien d'une vitesse stable de déplacement de l'aéronef, de générer une consigne de couple de remplacement (5) permettant le déplacement de l'aéronef à une vitesse stable, et de substituer la consigne de couple de remplacement à la consigne de couple générée par le pilote.

2. Procédé selon la revendication 1, dans lequel la consigne de couple de remplacement (5) est substituée à la consigne de couple (4) générée par le pilote tant que la consigne de couple de remplacement est supérieure à la consigne de couple générée par le pilote.

3. Procédé selon la revendication 1, dans lequel la consigne de couple de remplacement est générée par un générateur de consigne (11) de façon à asservir une vitesse de déplacement de l'aéronef à une consigne de vitesse (V1).

4. Procédé selon la revendication 3, dans lequel le générateur de consigne de couple est activé par le pilote en plaçant une manette (3) de commande de couple sur un cran prédéterminé (10) disposé en début de course.

5. Procédé selon la revendication 3, dans lequel la manette comporte plusieurs crans (10,13), pour asservir une vitesse de l'aéronef selon plusieurs consignes respectives (V1, V2) prédéterminées.

6. Procédé selon la revendication 3, dans lequel la consigne de vitesse (Va) est la vitesse de l'aéronef au moment d'un actionnement par le pilote d'une commande (14) de régulation de vitesse.

## Patentansprüche

1. Verfahren zum Regeln des Drehmoments einer Antriebsvorrichtung (1) zum Drehantrieb von Rädern (2) eines Luftfahrzeugs, umfassend Aktoren, zum selektiven Drehantrieb der Räder des Luftfahrzeugs, um dessen Bewegung auf dem Boden sicherzustellen, umfassend den Schritt des Regelns eines Drehmoments, das von der Antriebsvorrichtung in Abhängigkeit eines Drehmomentsollwerts (4), der von dem Piloten ausgegeben wird, erzeugt wird, **dadurch gekennzeichnet, dass** das Verfahren, solange der Drehmomentsollwert nicht ausreicht, um das Halten einer stabilen Bewegungsgeschwindigkeit des Luftfahrzeugs zu garantieren, den Schritt des Erzeugens eines Ersatzdrehmomentsollwerts (5) umfasst, der die Bewegung des Luftfahrzeugs mit einer stabilen Geschwindigkeit ermöglicht, sowie des Ersetzens des von dem Piloten erzeugten Drehmomentsollwertes durch den Ersatzdrehmomentsollwert.

2. Verfahren nach Anspruch 1, bei dem der Ersatzdrehmomentsollwert (5) den von dem Piloten erzeugten Drehmomentsollwert (4) ersetzt, solange der Ersatzdrehmomentsollwert größer als der von dem Piloten erzeugte Drehmomentsollwert ist.

3. Verfahren nach Anspruch 1, bei dem der Ersatzdrehmomentsollwert von einem Sollwerterzeuger (11) derart erzeugt wird, dass eine Bewegungsgeschwindigkeit des Luftfahrzeugs auf einen Geschwindigkeitssollwert (V1) geregelt wird.

4. Verfahren nach Anspruch 3, bei dem der Drehmomentsollwerterzeuger von dem Piloten aktiviert wird, indem ein Drehmomentsteuerhebel (3) auf eine vorbestimmte Raste (10) gesetzt wird, die am Hubanfang angeordnet ist.

5. Verfahren nach Anspruch 3, bei dem der Hebel mehrere Rasten (10, 13) umfasst, um eine Geschwindigkeit des Luftfahrzeugs gemäß mehreren vorbestimmten jeweiligen Sollwerten (V1, V2) zu regeln.

6. Verfahren nach Anspruch 3, bei dem der Geschwindigkeitssollwert (Va) die Geschwindigkeit des Luftfahrzeugs zum Zeitpunkt einer Betätigung einer Geschwindigkeitsregulierungssteuerung (14) durch den Piloten ist.

## Claims

1. A method for controlling the torque of a drive device (1) for rotating wheels (2) of an aircraft comprising actuators for selectively driving rotating wheels of the aircraft to ensure its movement on the ground, comprising the step of regulating a torque generated by the drive device according to a torque setpoint (4) issued by the pilot, **characterized in that** the method comprises the step of generating, as long as the torque setpoint is not sufficient to guarantee a stable movement speed of the aircraft, a replacement torque setpoint (5) to allow the aircraft to move at a stable speed, and substituting the replacement torque setpoint for the torque setpoint generated by the pilot.

2. A method according to claim 1, wherein the replacement torque setpoint (5) is substituted for the torque setpoint (4) generated by the pilot as long as the replacement torque setpoint is greater than the torque setpoint generated by the pilot.

3. A method according to claim 1, wherein the replacement torque setpoint is generated by a setpoint generator (11) so as to control an aircraft movement speed at a speed setpoint (V1).

4. A method according to claim 3, wherein the torque setpoint generator is activated by the pilot by placing a torque control lever (3) on a predetermined notch (10) arranged at the beginning of the stroke.

5. A method according to claim 3, wherein the lever has a plurality of notches (10, 13), for controlling an aircraft speed according to a plurality of respective predetermined setpoints (V1, V2).

6. A method according to claim 3, wherein the speed setpoint (Va) is the speed of the aircraft at the time of actuation by the pilot of a speed regulation control (14). Fig. 1
